# EUROPÄISCHE PATENTANMELDUNG

(11) **EP 0 778 200 A2**
(43) Veröffentlichungstag der Anmeldung: **11.06.1997**
(21) Anmeldenummer: 96118411.6
(22) Anmeldetag: 16.11.1996
(51) Int. Cl.: B64G 1/14

(54) **Mehrstufiges Raumfahrt-Transportsystem und Verfahren zum Horizontalstart**

(30) Priorität: 07.12.1995 DE 19545711; 07.12.1995 DE 19545710
(71) Anmelder: Daimler-Benz Aerospace Aktiengesellschaft, 80995 München (DE)
(72) Erfinder: Stockfleth, Holger, Dipl.-Ing., 27809 Lemwerder (DE); Spies, Johann, Dipl.-Ing., 28816 Stuhr (DE)
(74) Vertreter: Hansmann, Dierk, Dipl.-Ing.

(57) **Zusammenfassung**

Es ist vorgesehen, ein absetzbares Fluggerät (2) mit einem wiederverwendbaren aerodynamischen Trägergerät (1) zu verbinden, wobei das Fluggerät (2) eine Antriebsanlage (5) als Alleinantrieb für die Gesamtanordnung aufweist. Hierbei sind im Trägergerät (1) als Start- und Landevorrichtung Treibstofftanks für die Versorgung der Antriebsanlage (5) angeordnet.

## Beschreibung

Die Erfindung bezieht sich auf ein mehrstufiges Raumfahrt-Transportsystem bestehend aus einem wiederverwendbaren Tragkörper als Starthilfsgerät mit aerodynamischen Auftriebsmitteln und einem über Verbindungselemente entkoppelbaren Fluggerät, mit einer Antriebsanlage aus Triebwerk und Treibstofftanks sowie ein Verfahren zum Horizontalstart.

Bei Ausbildungen dieser Art besteht das Problem in der konsequenten Nutzung des Antriebes, damit einerseits die Nutzlastkapazität erhöht und andererseits ein hohes Einsparungspotential erzielbar ist.

Nach der DE-A-37 40 645 ist ein gattungsgemäßes System bekannt. Hierbei besteht der Mangel, daß es erforderlich ist, den wiederverwendbaren Trägerkörper als sogenannte erste Stufe triebwerksmäßig voll funktionsfähig auszurüsten und eine Umschaltung auf ein weiteres Triebwerk für die Stufentrennung vorzunehmen.

Die Aufgabe der Erfindung besteht darin, eine gattungsgemäße Anordnung zu verbessern und eine Nutzung des Antriebes des abzusetzenden Fluggerätes für die Gesamtanordnung zu schaffen sowie eine optimierte Treibstofflagerung zu gewährleisten und einen Horizontalstart zu ermöglichen.

Die Lösung dieser Aufgabe erfolgt erfindungsgemäß dadurch, daß ein aerodynamisch ausgebildete Tragkörper mit einem Landefahrwerk Treibstofftanks mit Trennventilen in Versorgungsleitungen zur lösbaren Verbindung mit der Versorgung des Triebwerks des abtrennbaren Fluggerätes aufweist, wobei das Triebwerk des abtrennbaren Fluggerätes als Alleinantrieb für die Gesamtanordnung ausgebildet ist und während der Transportphase eine Treibstoffversorgung über die Versorgungsleitungen der Treibstofftanks des Tragkörpers geschaltet ist.

Weitere vorteilhafte Ausbildungen der Vorrichtung sind durch die Merkmale der Unteransprüche 2 bis 4 gekennzeichnet.

Die erzielten Vorteile bestehen darin, daß die Nutzlastkapazität einer nicht wiederverwendbaren Rakete in etwa verdoppelbar ist oder eine nicht wiederverwendbare Stufe eines mehrstufigen Trägers bzw. dessen Booster durch das wiederverwendbare Starthilfegerät ersetzt werden kann.

Weiterhin wir unter Verwendung der vorgeschlagenen Vorrichtung ein Verfahren vorgeschlagen, daß der Tragkörper mit dem entkoppelbaren Fluggerät bis zu einer Geschwindigkeit von etwa Mach 2,5 bis 5 steil aufsteigt und nach Erreichen dieser Geschwindigkeit eine Trennung der gekoppelten Fluggeräte erfolgt und das Starthilfefluggerät im Gleitflug zur Landung zurückführbar ist.

Hierdurch ist eine Einsparung von Starthilfen, wie ein Starttisch oder Beschleunigungsschlitten bei Horizontalstartern möglich und es braucht die Flügelgröße nur für die Landung dimensioniert werden. Die Flügelbelastung wird somit beim Anheben des Bahnwinkels beim Horizontalstart geringer, weil dieses Manöver hauptsächlich das Starthilfegerät belastet. Im anderen Fall ist dieser Lastfall bestimmend und führt somit zu hohen Flügelstrukturmassen. Durch die Flügelfläche des Trägerkörpers als Starthilfefluggerät ergeben sich moderate Abhebegeschwindigkeiten beim Start. Der Aufstieg erfolgt aerodynamisch gestützt und eine Beschleunigung ist bis zum Erreichen von Mach 4 bis 5 ohne zusätzliche Heimkehrhilfe durchführbar.

Ausführungsbeispiele der Erfindung sind in der Zeichnung schematisch dargestellt. Es zeigen:
- Fig. 1: eine Seitenansicht eines Tragkörpers mit einem unterhalb aufgehängten und entkoppelbaren Fluggerät mit Antrieb,
- Fig. 2: eine Tankanordnung mit einer Verbindung der Versorgungsleitungen,
- Fig. 3: eine Tankanordnung in alternativer Ausbildung mit Verbindungen der Tanks,

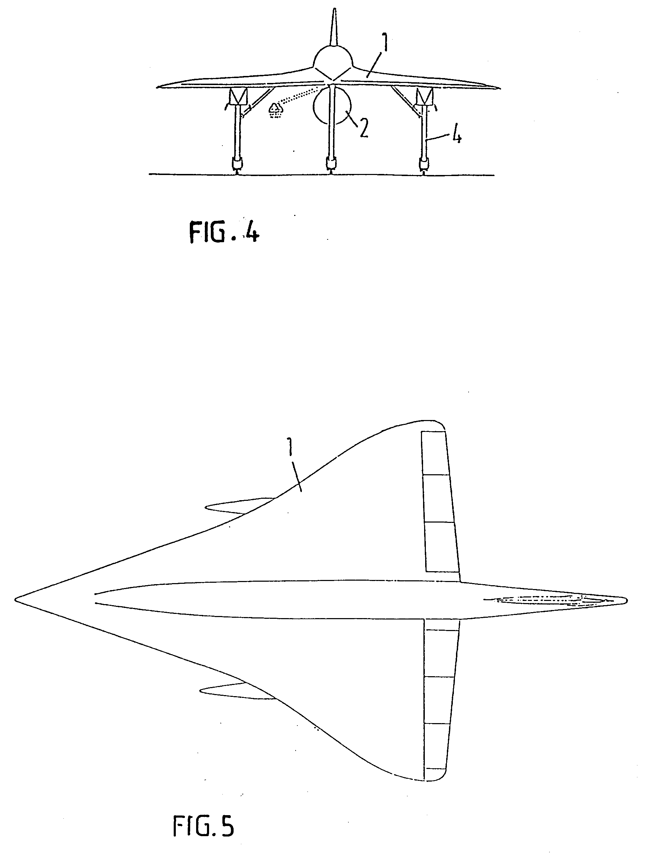

- Fig. 4: eine Draufsicht auf einen Tragkörper,
- Fig. 5: eine Vorderansicht eines Tragkörpers mit Fluggerät,
- Fig. 6: eine weitere Draufsicht auf einen Tragkörper mit Flächen- und Rumpftanks **und**

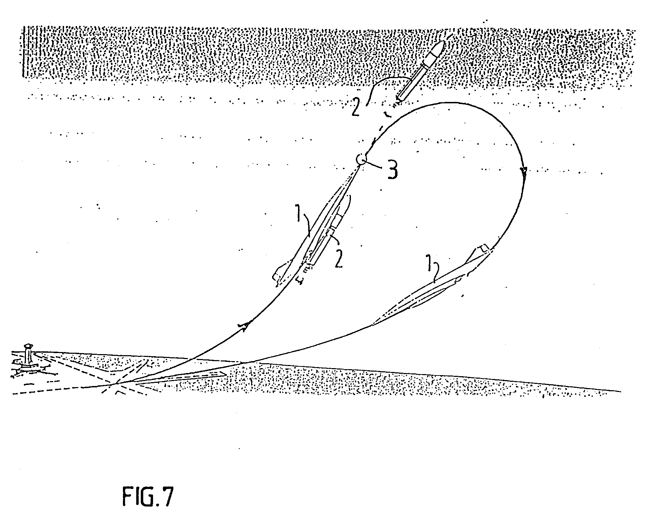

- Fig. 7: einen Ablauf eines Start- und Landeverfahrens in einzelnen Phasen.

Bei der gezeigten Anordnung ist mit einem aerodynamischen Tragkörper 1 als Starthilfsgerät ein Fluggerät 2, wie beispielsweise eine Rakete, verbunden. Dieses Fluggerät 2 ist mit einer Antriebsanlage 5 als Raketenantrieb für die Gesamtanordnung versehen, so daß der Tragkörper 1 keinen Antrieb besitzt.

Das Fluggerät 2 ist unterhalb oder oberhalb des Rumpfes des Tragkörpers 1 zwischen einem zugeordneten Fahrwerk 4 über entkoppelbare Verbindungselemente 6 angeordnet und die während des Fluges entsprechend lösbar sind.

Im Rumpf des Tragkörpers 1 sind getrennte Treibstofftanks 7,8 für LOX (Liquid Oxygenium) und LH2 (Liquid Hydrogenium) angeordnet, die über Versorgungsleitungen 9,10 mit dem Raketenantrieb 5 des Fluggerätes 2 zur Treibstoffversorgung des Triebwerks 5 über die Leitungen 11,12 der Treibstofftanks 13,14 des Fluggerätes 2 verbunden sind. In den Versorgungsleitungen 9,10 sind entsprechende Trennventile 15,16 vorgesehen, damit ein problemloses Entkoppeln möglich ist. Ferner sind Umschaltventile 17,18 vorgesehen, die eine Förderung aus den Treibstofftanks 7,8 des Tragkörpers 1 gewährleisten und nach der Trennung eine Förderung aus den Treibstofftanks 13,14 des Fluggerätes 2 ermöglichen.

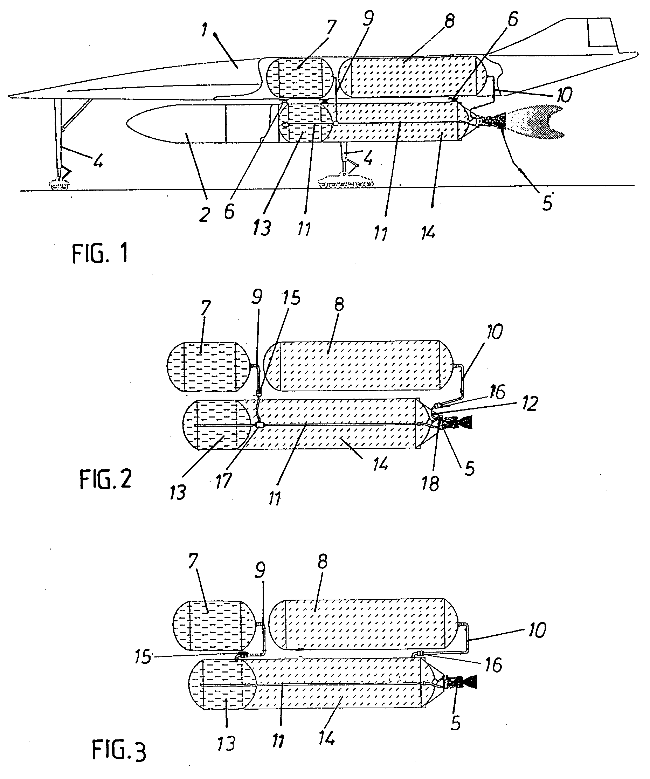

In der Tankausbildung gemäß Fig. 3 ist ein alternatives Förderkonzept dargestellt, wobei die Treibstofftanks 7 und 13 sowie 8 und 14 direkt über die Verbindungsleitungen 9,10 unter Zwischenhaltung der Trennventile 15,16 verbunden sind.

Das Startverfahren erfolgt durch den Raketenantrieb 5 am verbundenen Fluggerät 2. Die beiden gekoppelten Geräte 1 und 2 werden horizontal gestartet. Der Aufstieg erfolgt aerodynamisch gestützt und bei einer Geschwindigkeit von etwa Mach2,5 bis 5 (Position 3) erfolgt eine Abtrennung des Fluggerätes 2 vom Tragkörper 1 über die Entkopplung der Verbindungselemente 6 und der Trennventile 15, 16 in den Versorgungsleitungen 9,10. Damit erfolgt nunmehr eine Versorgung des Triebwerks 5 des Fluggerätes 2 über seine eigenen Treibstofftanks 13,14. Nach dem Trennvorgang kehrt der Tragkörper 1 im Gleitflug unmittelbar zur Startbahn zurück.

Der Tragkörper 1 als Starthilfe kann bis zum Erreichen von Mach 4 bis 5 ohne zusätzliche Heimkehrhilfe zur Startbahn zurückkehren.

Das Fahrwerk 4 und die Flügelfläche des Tragkörpers 1 ist auch für einen Startabbruch mit anschließender Landung mit eventuell nicht verbrauchten Resttreibstoffen auslegbar.

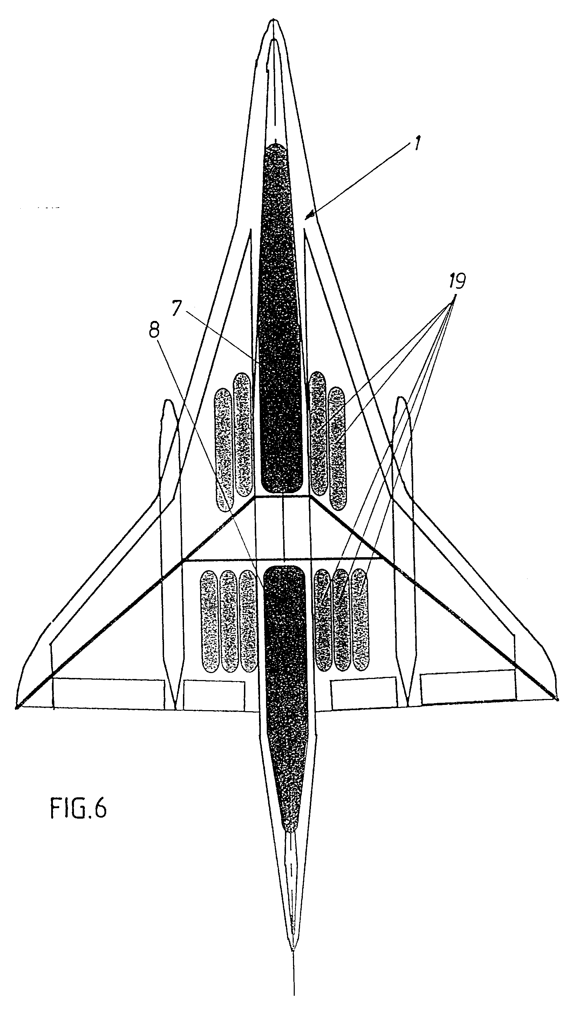

Gemäß Fig. 6 sind gegebenenfalls zu den Treibstofftanks 7,8 im Rumpf auch im Flügel Treibstofftanks 19 untergebracht, um das vorhandene Volumen zu nutzen und um eine mechanisch günstigere Lastverteilung zu erreichen.

## Patentansprüche

1. Mehrstufiges Raumfahrt-Transportsystem, bestehend aus einem wiederverwendbaren Tragkörper (1) als Starthilfsgerät mit aerodynamischen Auftriebsmitteln und einem über Verbindungselemente (6) entkoppelbaren Fluggerät (2), mit einer Antriebsanlage aus Triebwerk (5) und Treibstofftanks (13,14), dadurch gekennzeichnet, daß ein aerodynamisch ausgebildeter Tragkörper (1) mit einem Landefahrwerk (4) Treibstofftanks (7,8) mit Trennventilen (15,16) in Versorgungsleitungen (9,10) zur lösbaren Verbindung mit der Versorgung des Triebwerks (5) des abtrennbaren Fluggerätes (2) aufweist, wobei das Triebwerk (5) des abtrennbaren Fluggerätes (2) als Alleinantrieb für die Gesamtanordnung (1,2) ausgebildet ist und während der Transportphase eine Treibstoffversorgung über die Versorgungsleitungen (9,10) der Treibstofftanks (7,8) des Tragkörpers (1) geschaltet ist.

2. Vorrichtung nach Anspruch 1, dadurch gekennzeichnet, daß das absetzbare Fluggerät (2) unterhalb des Tragkörpers (1) im Bereich des Landefahrwerks (4) angeordnet ist.

3. Vorrichtung nach Anspruch 1 oder 2, dadurch gekennzeichnet, daß die Versorgungsleitungen (9,10) von den Treibstofftanks (7,8) des Tragkörpers (1) mit den Versorgungsleitungen (11,12) des Triebwerks (5) des Fluggerätes (2) verbunden sind.

4. Vorrichtung nach Anspruch 1 oder 2, dadurch gekennzeichnet, daß die Versorgungsleitungen (9,10) von den Treibstofftanks (7,8) des Tragkörpers (1) mit den Treibstofftanks (13,14) des Fluggerätes (2) verbunden sind.

5. Verfahren für Raumfahrt-Transsportsysteme zum Horizontalstart mit einer Vorrichtung gemäß Anspruch 1, dadurch gekennzeichnet, daß der Tragkörper (1) mit dem entkoppelbaren Fluggerät (2) bis zu einer Geschwindigkeit von etwa Mach 2,5 bis 5 steil aufsteigt und nach Erreichen dieser Geschwindigkeit eine Trennung der gekoppelten Fluggeräte (1,2) erfolgt und das Starthilfefluggerät (1) im Gleitflug zur Landung zurückführbar ist.
